(19) Europäisches Patentamt

European Patent Office

Office européen des brevets

(11) **EP 2 898 315 B1**

(12) **FASCICULE DE BREVET EUROPEEN**

(45) Date de publication et mention de la délivrance du brevet:
**26.04.2017  Bulletin 2017/17**

(21) Numéro de dépôt: **13831828.2**

(22) Date de dépôt: **19.09.2013**

(51) Int Cl.:
*G01N 23/20* *(2006.01)*    *G01V 5/00* *(2006.01)*

(86) Numéro de dépôt international:
**PCT/FR2013/052173**

(87) Numéro de publication internationale:
**WO 2014/044982 (27.03.2014 Gazette 2014/13)**

(54) **PROCEDE D'ANALYSE PAR DIFFRACTOMETRIE ET DIFFRACTOMETRE ASSOCIE, PARTICULIEREMENT ADAPTES A DES ECHANTILLONS COMPORTANT PLUSIEURS COUCHES DE MATERIAUX**

DIFFRAKTOMETRIEBASIERTES ANALYSEVERFAHREN UND ZUGEHÖRIGES DIFFRAKTOMETER, INSBESONDERE FÜR PROBEN MIT MEHREREN MATERIALSCHICHTEN

DIFFRACTOMETRY-BASED ANALYSIS METHOD AND ASSOCIATED DIFFRACTOMETER, PARTICULARLY SUITABLE FOR SAMPLES COMPRISING MULTIPLE LAYERS OF MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.09.2012  FR 1258851**

(43) Date de publication de la demande:
**29.07.2015  Bulletin 2015/31**

(73) Titulaire: **Commissariat à l'Energie Atomique et aux Energies Alternatives**
**75015 Paris (FR)**

(72) Inventeurs:
• **GHAMMRAOUI, Bahaa**
  **Nord Du Liban (LB)**
• **PAULUS, Caroline**
  **F-38000 Grenoble (FR)**

• **TABARY, Joachim**
  **F-38100 Grenoble (FR)**

(74) Mandataire: **Santarelli**
**Immeuble Innopolis A**
**2ème étage**
**1149 La Pyrénéenne**
**CS 77697**
**31676 Labège Cedex (FR)**

(56) Documents cités:
**US-A- 5 007 072     US-A1- 2006 140 340**

• **HARDING ET AL: "X-ray diffraction imaging-A multi-generational perspective", APPLIED RADIATION AND ISOTOPES, ELSEVIER, OXFORD, GB, vol. 67, no. 2, 1 février 2009 (2009-02-01), pages 287-295, XP025846513, ISSN: 0969-8043, DOI: 10.1016/J.APRADISO.2008.08.006 [extrait le 2008-08-14]**

EP 2 898 315 B1

**Description**

La présente invention concerne un procédé d'analyse d'un matériau par diffractométrie, et un diffractomètre associé.

Il est connu d'utiliser la diffractométrie pour détecter certaines substances cristallines telles que la plupart des explosifs ou de nombreuses autres structures dangereuses ou illégales. Dans un cristal, qui est un agencement d'atomes, les ondes électromagnétiques diffusées de façon élastique interfèrent entre elles pour donner une diffusion cohérente à l'échelle du cristal. Lorsque ces interférences sont constructives, elles peuvent être repérées par la mesure d'un rayonnement diffracté et par l'identification des pics de diffraction. Ainsi, les interférences constructives sont repérées par une apparition de pics de diffraction (ou pics de Bragg) dans le rayonnement diffusé par un matériau.

Pour savoir si une substance cristalline donnée est contenue dans un matériau, il est donc connu de :

✔ irradier un échantillon du matériau à l'aide d'un faisceau incident d'axe central X, émis par une source,
✔ étudier le rayonnement diffracté à l'aide d'un dispositif de détection comprenant

♦ un détecteur, dit détecteur spectrométrique, apte à établir un spectre en énergie du rayonnement diffusé selon un angle de diffusion donné, c'est-à-dire un détecteur comprenant

◦ un matériau détecteur, qui présente, du côté de l'échantillon de matériau, un plan dit plan de détection,
◦ des moyens, dits moyens de mesure spectrométrique, aptes à mesurer une énergie libérée par chaque interaction d'un photon avec le matériau détecteur et à établir au moins un spectre en énergie, noté S(E).

♦ un collimateur, dit collimateur de détection, associé au détecteur, le détecteur et le collimateur de détection étant agencés de façon à présenter un axe de détection D, l'axe de détection D formant avec l'axe central X du faisceau incident un angle de diffraction θ.

Il est à noter qu'un spectre en énergie illustre la distribution de l'énergie d'un rayonnement sous la forme d'un histogramme représentant le nombre d'interactions de photon dans le matériau (en ordonnée) en fonction de l'énergie libérée (en abscisse). Généralement, l'axe des énergies est discrétisé en canaux de largeur 2 δE, un canal Ci correspondant aux énergies comprises entre Ei-δE et Ei+δE.

Les divers pics obtenus sur un spectre en énergie d'un rayonnement diffusé, selon un angle θ, sont caractéristiques du matériau analysé, car le rayonnement diffusé participant aux interférences constructives vérifie l'équation suivante,

$$E_{hkl} = n \frac{hc}{2d_{hkl} \sin(\theta/2)}$$

avec :

$d_{hkl}$ :      distance inter-réticulaire entre les plans cristallographiques du cristal irradié ;
θ :      angle de diffusion, c'est-à-dire l'angle formé entre le rayonnement diffusé analysé et le faisceau incident au cristal irradié
h :      constante de Planck,
c :      vitesse de la lumière
n :      l'ordre de l'interférence:

Cette propriété est exploitée dans des méthodes bien connues, désignées par l'acronyme EDXRD ou "Energie Dispersive X-Ray Diffraction".

WO2008/142446 décrit un procédé de détermination de la composition d'un objet par la détection spectrométrique d'un objet irradié par un rayonnement X. Il est fait référence, dans la description de l'art antérieur de WO2008/142446, à des contrôles de bagages. Le procédé décrit comprend les étapes suivantes :

✔ irradiation de l'objet, notamment à l'aide d'un rayonnement X,
✔ détection de l'intensité transmise à travers l'objet à l'aide d'un détecteur spectrométrique. Il est à noter que le rayonnement étudié ici est le rayonnement transmis par l'échantillon de matériau et non diffracté ; en d'autres termes, l'axe de détection D est confondu avec l'axe X du faisceau incident,
✔ sélection de bandes d'énergies dans le spectre transmis, et établissement de grandeurs de transmission dans chacune de ces bandes,
✔ comparaison d'au moins deux desdites grandeurs obtenues.

Selon un premier mode de réalisation, on cherche à identifier le matériau en détectant la signature d'une diffraction de Bragg. Pour cela, on met en évidence une discontinuité de l'intensité transmise, à une énergie donnée, ou du moins dans une bande d'énergie étroite. Cette discontinuité est supposée correspondre à une baisse localisée de l'amplitude du signal transmis sous l'effet d'une diffusion élastique (diffraction de Bragg) dans le réseau cristallin du matériau analysé. Cette diffusion n'a lieu que pour certaines énergies incidentes Ei discrètes et on considère qu'au voisinage de cette énergie, le signal transmis décroît. Ainsi, en comparant l'intensité du signal transmis à cette énergie dans une bande étroite d'énergie centrée sur Ei avec le signal transmis à une autre énergie, on détecte la présence de tel ou tel matériau. Autrement dit, dans cette demande, on analyse le rayonnement transmis par l'objet, et en particulier les discontinuités dans son spectre en énergie du fait de la diffraction de Bragg.

En diffractométrie, deux paramètres sont essentiels pour disposer d'un système de détection fiable et efficace : la sensibilité et la résolution en énergie. Comme toujours, ces deux paramètres varient inversement : l'amélioration de l'un s'accompagne d'une dégradation de l'autre. Les inventeurs ont proposé dans une précédente demande FR11/62497, un procédé et un dispositif d'analyse d'un échantillon de matériau par diffractométrie, dont la résolution en énergie est améliorée, afin d'obtenir une séparation plus nette des pics de diffraction pour une meilleure identification des matériaux. Dans ce procédé antérieur :

✔ on utilise un diffractomètre comprenant

♦ une source apte à émettre un faisceau incident d'axe central X,
♦ un détecteur comprenant

○ un matériau détecteur, qui présente, du côté de l'échantillon de matériau, un plan dit plan de détection,
○ et des moyens de mesure spectrométrique, apte à mesurer une énergie libérée par chaque interaction de photon avec le matériau détecteur et à établir au moins un spectre en énergie, noté S(E), le détecteur étant de ce fait qualifié de détecteur spectrométrique ;
○ des moyens de localisation d'une interaction d'un photon avec le matériau détecteur, permettant d'une part de définir une partition du détecteur en pixels physiques ou virtuels, et d'autre part d'associer l'un desdits pixels à chaque interaction de photon ; le détecteur utilisé étant de ce fait qualifié de détecteur pixellisé ;

♦ un collimateur, dit collimateur de détection, associé au détecteur, le détecteur et le collimateur de détection étant agencés de façon à présenter un axe de détection D formant avec l'axe central X du faisceau incident un angle de diffraction θ,

✔ on irradie l'échantillon avec le faisceau incident,
✔ on établit un spectre en énergie Si(E) pour chaque pixel du détecteur,
✔ on combine les spectres en énergie précédemment obtenus.

Le gain en résolution énergétique obtenu grâce au procédé et au dispositif de FR11/62497 permet d'envisager d'augmenter la sensibilité, tout en conservant une résolution énergétique très satisfaisante. Pour améliorer la sensibilité, il suffit d'augmenter l'ouverture du collimateur de détection afin de collecter davantage de signal. Mais le champ observé (ou volume d'inspection, défini comme étant le volume, dans l'échantillon de matériau, délimité d'une part par le faisceau incident et d'autre part par l'angle solide sous lequel le détecteur voit l'échantillon de matériau - c'est -à-dire angle solide délimité par l'ouverture du collimateur de détection et le plan de détection du détecteur-) est alors plus grand, avec un risque accru de superposition de matériaux, ce qui peut compliquer l'interprétation des spectres obtenus.

L'invention vise à résoudre ce problème en proposant un procédé et un dispositif particulièrement adaptés à l'analyse d'échantillons comprenant plusieurs couches de matériaux. De la sorte, il devient possible d'utiliser un collimateur de détection ouvert pour obtenir un dispositif à la fois sensible, grâce à cette ouverture, et bénéficiant d'une bonne résolution énergétique grâce son détecteur pixellisé.

Un autre objectif de l'invention est d'atteindre ce but sans augmentation significative des coûts de fabrication du dispositif ni de son encombrement.

A cette fin, l'invention propose un procédé d'analyse d'un échantillon de matériaux selon la revendication 1.

Avantageusement et selon l'invention, les spectres recalés établis sont des spectres en transfert de quantité de mouvement $S_i(x)$, le changement de variable étant effectué en utilisant la formule suivante :

$$x = \frac{\sin(\theta_i/2)}{\lambda} = \frac{E\sin(\theta_i/2)}{hc}$$, où θi designe l'angle de diffraction correspondant au pixel Pi c'est-à-dire l'angle entre l'axe X du faisceau incident et l'axe Di passant par le centre du pixel Pi et le centre du collimateur de détection, et À est la longueur d'onde correspondant à l'énergie E.

Le changement de variable effectué dans l'étape de recalage des spectres permet ensuite, lors de l'étape de combinaison de spectres, de combiner de façon arithmétique (par exemple de sommer, lorsque la variable utilisée est le transfert de quantité de mouvement) directement des spectres recalés correspondant à différents pixels. Il offre donc une méthode de combinaison de spectres extrêmement simple, qui peut être mise en oeuvre à l'aide de moyens de calcul peu gourmands en énergie et en mémoire.

Dans toute la suite, on entend par :

- « plan de diffraction », un plan (X,D) défini par l'axe X du faisceau incident et par l'axe de détection D,
- « direction transversale », une direction orthogonale à l'axe D et contenue dans le plan de diffraction,
- « position latérale d'un pixel Pi du détecteur », une coordonnée du pixel Pi suivant la direction transversale,

- « position dans un spectre d'un pic énergétique ou d'un maximum local », le canal ou l'énergie ou le transfert de quantité de mouvement x (s'il s'agit d'un spectre recalé) correspondant audit pic.

Selon l'invention, chaque critère multimatériau est choisi parmi :

✓ une variation significative, par exemple supérieure à 10 %, de la position d'un premier maximum local, défini comme étant le premier pic détecté selon l'axe des abscisses dans les spectres recalés, entre deux pixels adjacents selon la direction transversale ; ce critère est appelé par la suite critère multimatériau du premier maximum local,

✓ une variation significative, par exemple supérieure à 10 %, de la position d'un second maximum local, défini comme étant le deuxième pic détecté selon l'axe des abscisses dans les spectres recalés, entre deux pixels adjacents selon la direction transversale ; ce critère est appelé par la suite critère multimatériau du second maximum local.

✓ une variation significative, par exemple supérieure à 10%, de la somme des canaux du spectre recalé (autrement dit de l'intégrale du spectre recalé, c'est-à-dire de l'aire délimitée par la courbe du spectre décalé et l'axe des abscisses) de chaque pixel, entre deux pixels adjacents selon la direction transversale.

De préférence, pour vérifier la réalisation du critère multimatériau du premier (respectivement, second) maximum local défini ci-avant, on construit une courbe représentant, en ordonnées, la position dans le spectre du premier (respectivement, second) maximum local, en fonction, en abscisses, de la position latérale Yi du pixel Pi ou de son angle de diffraction θi. Si cette courbe présente au moins un « saut », c'est-à-dire une augmentation ou une diminution de plus de 10% en ordonnées entre deux pixels adjacents, et donc sur une variation en abscisses inférieure à une dimension maximale des pixels selon la direction transversale.

Chaque valeur Yi de la position latérale où intervient un tel saut est utilisée pour la formation des groupes de pixels. Tous les pixels dont la position latérale Yi (ou l'angle de diffraction θi) est comprise entre deux sauts consécutifs sont considérés comme appartenant à un même groupe.

De préférence, le procédé d'analyse selon l'invention comprend la vérification de la réalisation de deux critères multimatériau.

L'invention s'étend à un diffractomètre apte à mettre en oeuvre le procédé selon l'invention. En particulier, l'invention propose un diffractomètre selon la revendication 9.

De préférence, les moyens de recalage sont aptes à établir, pour chaque spectre en énergie mesuré, un spectre en transfert de quantité de mouvement $S_i(x)$,

par changement de variable en utilisant la formule indiquée supra. Les moyens de combinaison sont alors aptes à sommer des spectres recalés.

Selon l'invention, les moyens de vérification d'au moins un critère multimatériau sont aptes à vérifier le critère multimatériau du premier maximum local. Dans ce cas, ils sont de préférence aptes à établir une courbe représentant, en ordonnées, la position dans le spectre d'un premier maximum local, en fonction, en abscisses, d'un angle de diffraction θi du pixel Pi ou d'une position latérale Yi de celui-ci, définie comme étant une coordonnée du pixel Pi selon une direction transversale (T), orthogonale à l'axe de détection D et contenue dans un plan de détection (X,D). Les moyens de formation de groupes de pixels sont alors adaptés pour regrouper dans un même groupe deux pixels Pi et $P_{i+1}$ adjacents selon la direction transversale si et seulement si la différence entre la position du premier maximum local dans le spectre recalé du pixel Pi et la position du premier maximum local dans le spectre recalé du pixel Pi+1 ne varient pas de plus de 10%.

Avantageusement et selon l'invention, les moyens de vérification d'au moins un critère multimatériau sont, en variante ou de plus, aptes à vérifier le critère multimatériau du second maximum local. Dans ce cas, ils sont de préférence aptes à établir une courbe représentant, en ordonnées, la position dans le spectre recalé (du pixel Pi) d'un second maximum local, en fonction, en abscisses, de l'angle de diffraction θi du pixel Pi ou de la position latérale Yi de celui-ci. Les moyens de formation de groupes de pixels sont alors adaptés pour regrouper dans un même groupe deux pixels Pi et $P_{i+1}$ adjacents selon la direction transversale si et seulement si la différence entre la position du second maximum local dans le spectre recalé du pixel Pi et la position du second maximum local dans le spectre recalé du pixel $P_{i+1}$ ne varient pas de plus de 10%.

Avantageusement, le procédé et le diffractomètre selon l'invention présentent l'une ou plusieurs des caractéristiques suivantes, toutes les combinaisons possibles étant conformes à l'invention :

✓ le détecteur est du type détecteur à matériau détecteur semi-conducteur, ce qui n'exclut pas la possibilité d'utiliser un détecteur du type détecteur à scintillateur. Les détecteurs à semi-conducteur sont généralement préférés pour leur meilleure résolution en énergie et pour leur plus faible encombrement.

✓ la source est une source polychromatique ;

✓ la source délivre un rayonnement dont l'énergie maximale est comprise entre 10 et 1000 keV, de préférence entre 10 et 200 keV ;

✓ le diffractomètre comprend un collimateur, dit collimateur de source, associé à la source de rayonnement ;

✓ le collimateur de source délimite le faisceau d'irradiation selon un axe Y du plan de diffraction orthogonal à l'axe X du faisceau incident ainsi que selon un axe Z orthogonal au plan de diffraction ;

✔ le collimateur de source est un collimateur à fente rectangulaire unique ;

✔ le collimateur de source présente une épaisseur (dimension selon l'axe X du faisceau incident) de 100mm et une hauteur de fente (dimension selon l'axe Y) de 0,10mm ;

✔ l'angle θ de diffraction est faible ; il est préférentiellement compris entre 2° et 10°. L'observation du phénomène de diffraction est plus claire à petit angle, car la diffusion cohérente prédomine pour un moment de transfert petit (le moment de transfert étant proportionnel à sin(θ/2)).

✔ le collimateur de détection utilisé est un collimateur à fente rectangulaire (voire carrée) unique ;

✔ le collimateur de détection est un collimateur qualifié de détecteur ouvert : il délimite le faisceau détecté de manière large selon la direction transversale ; pour ce faire, il présente une fente de hauteur supérieure à 1mm, de préférence supérieure à 2mm, par exemple de l'ordre de 2,5mm. La grande hauteur de fente du collimateur de détection dans le plan de diffraction (X,D) confère une grande sensibilité au dispositif d'analyse mais tend à dégrader ses résolutions angulaire et énergétique ; ce défaut est compensé, grâce à l'invention, par l'utilisation d'un détecteur pixellisé et par la combinaison par groupe des différents spectres obtenus.

✔ le collimateur de détection présente une fente de longueur supérieure à 2mm. L'ouverture du collimateur de détection suivant l'axe Z (longueur de fente du collimateur de détection) est intéressante pour augmenter le signal sans perdre en résolution angulaire, car l'angle de diffraction varie peu suivant l'axe Z en fonction du matériau.

✔ le collimateur de détection présente une épaisseur (dimension selon l'axe de détection D) de 100mm.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :

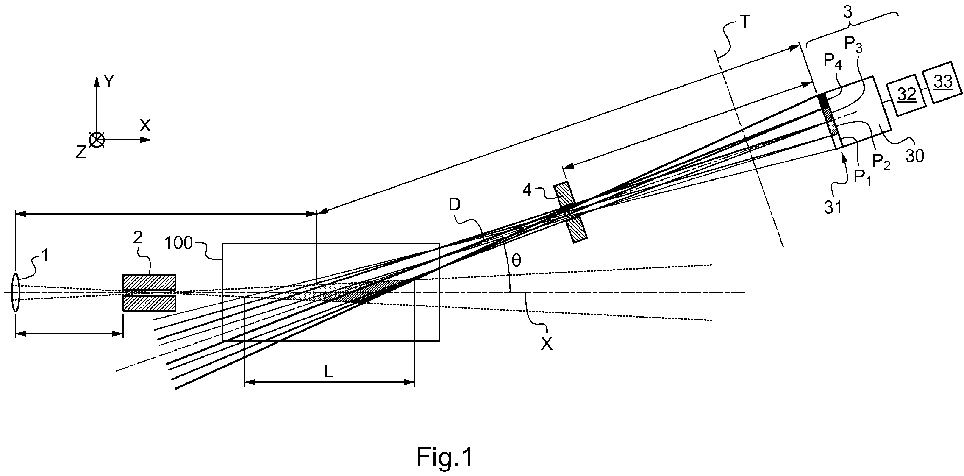

La figure 1 est une vue schématique en coupe dans un plan de diffraction d'un diffractomètre selon l'invention.

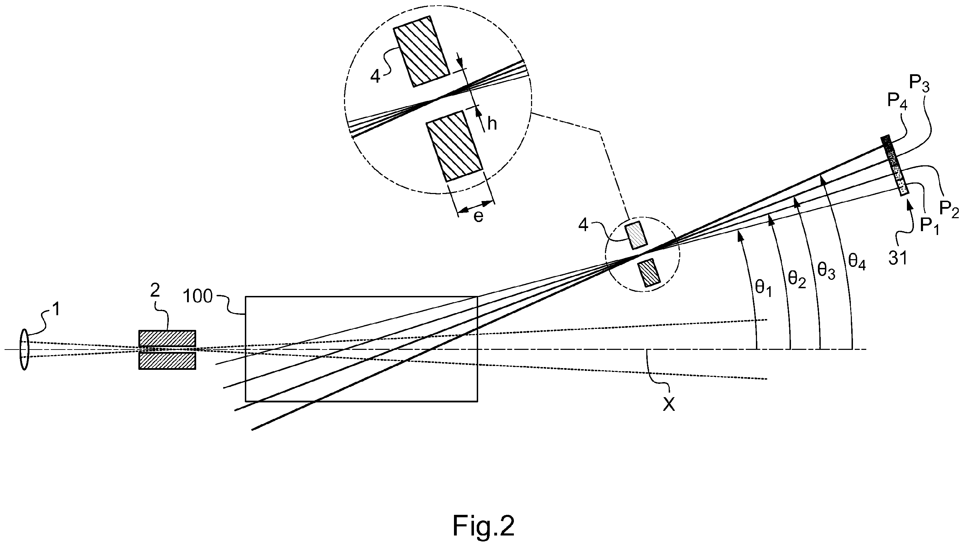

La figure 2 reprend la vue schématique de la figure 1 en y précisant quelques détails.

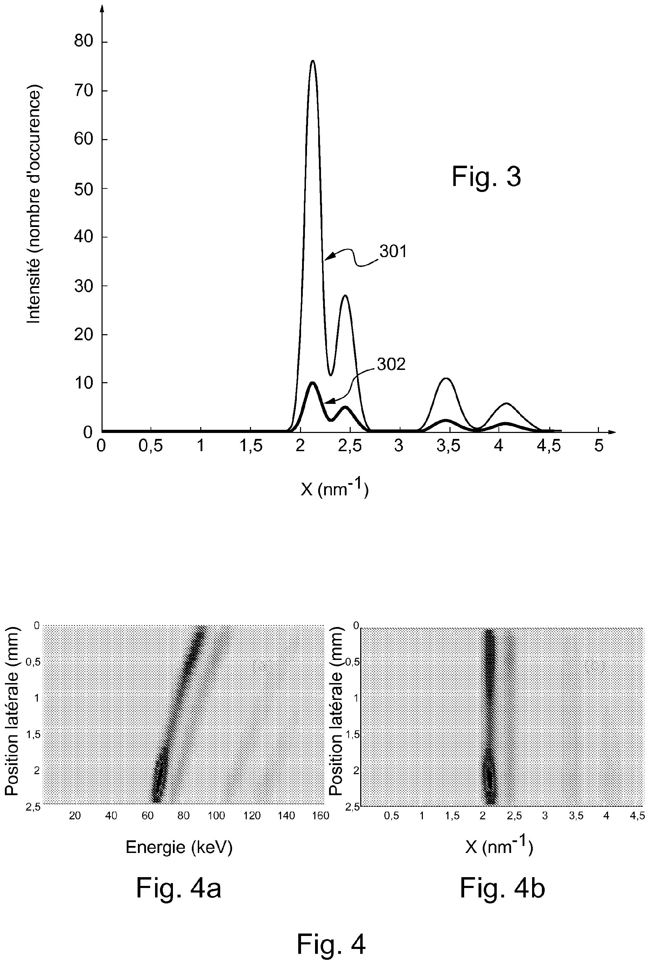

La figure 3 représente une simulation de deux spectres de diffraction recalés qui seraient obtenus pour un échantillon d'aluminium par un diffractomètre à détecteur pixellisé selon l'invention, en mettant en oeuvre un collimateur délimitant le faisceau détecté respectivement de manière étroite (on parle alors de collimateur étroit) et large (on parle alors de collimateur ouvert) selon l'axe transversal précédemment défini.

La figure 4 représente une simulation de spectres bi-paramétriques en position latérale qui seraient obtenus pour un échantillon d'aluminium par un diffractomètre à détecteur pixellisé selon l'invention avec un collimateur de détection ouvert. La figure 4a représente le spectre bi-paramétrique énergétique mesuré (avant recalage) ; la figure 4b représente le spectre bi-paramétrique recalé.

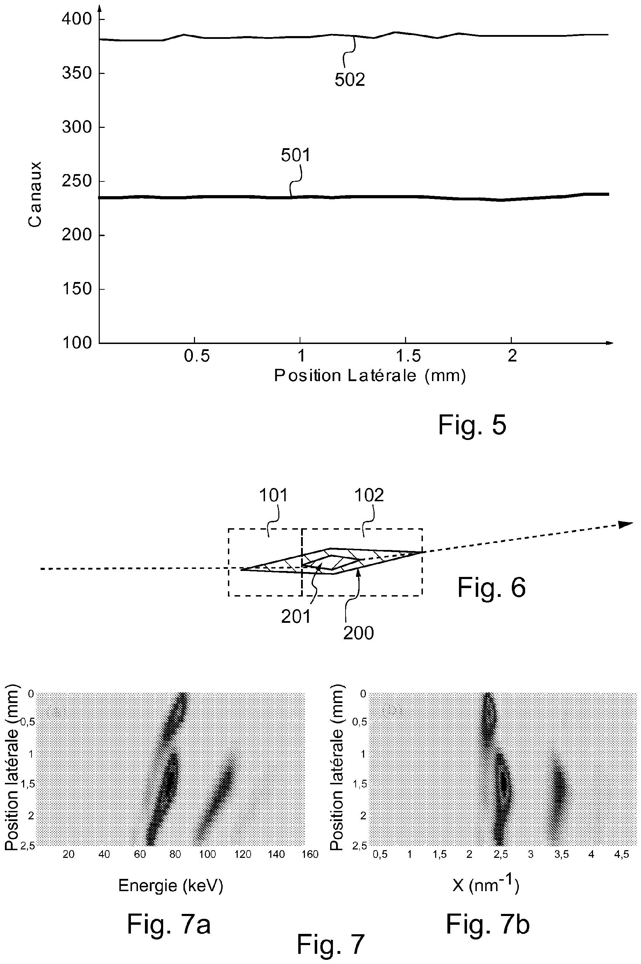

La figure 5 illustre, d'un part une courbe représentant la position du premier maximum local en fonction de la position latérale, et d'autre part une courbe représentant la position du deuxième maximum local en fonction de la position latérale des spectres recalés de la figure 4b.

La figure 6 illustre un échantillon de matériau 100 constitué de deux couches de matériaux, à savoir une couche de graphite et une couche de sel. Les volumes d'inspection observés, respectivement, par un détecteur à collimateur ouvert, et par un détecteur à collimateur étroit sont représentés sur la figure.

La figure 7 représente une simulation de spectres bi-paramétriques en position latérale qui seraient obtenus pour l'échantillon sel/graphite de la figure 6 par un diffractomètre à détecteur pixellisé selon l'invention avec un collimateur de détection ouvert. La figure 7a représente le spectre bi-paramétrique énergétique mesuré (avant recalage) ; la figure 7b représente le spectre bi-paramétrique recalé.

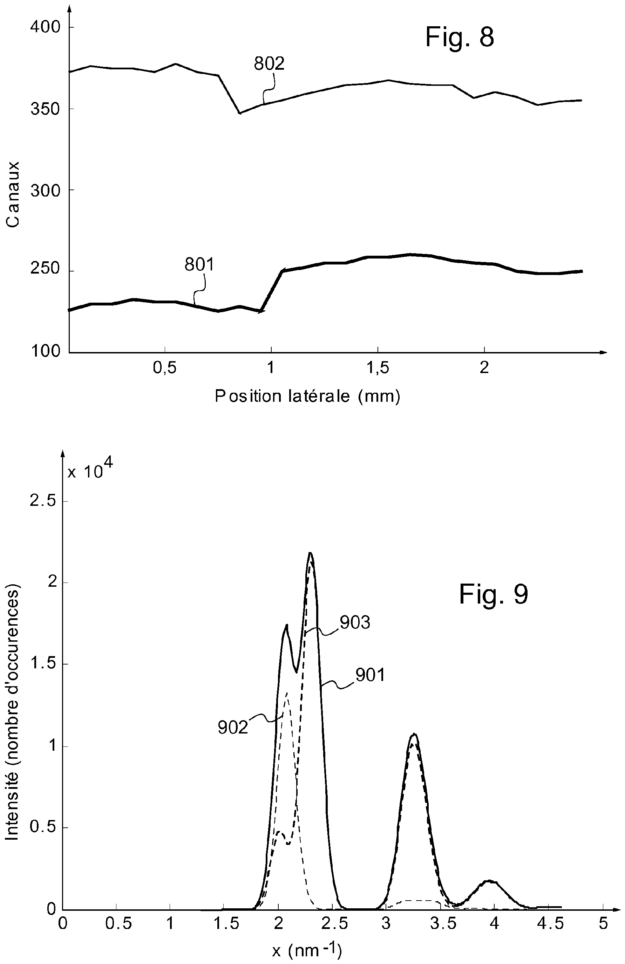

La figure 8 illustre, d'un part une courbe représentant la position du premier maximum local en fonction de la position latérale, et d'autre part une courbe représentant la position du deuxième maximum local en fonction de la position latérale, des spectres recalés de la figure 7b.

La figure 9 représente une simulation de spectres de diffraction recalés qui seraient obtenus pour l'échantillon sel/graphite de la figure 6 par un diffractomètre à détecteur pixellisé selon l'invention à collimateur de détection ouvert. Un premier spectre correspond au spectre obtenu par combinaison de l'ensemble des spectres des pixels du détecteur ; un deuxième spectre correspond au spectre obtenu par combinaison des spectres des pixels du détecteur ayant une position latérale comprise entre 0 et 1mm ; le troisième spectre correspond au spectre obtenu par combinaison des spectres des pixels du détecteur ayant une position latérale comprise entre 1 mm et 2,5mm.

La figure 1 illustre un diffractomètre selon l'invention. Celui-ci comprend tout d'abord une source 1 polychromatique d'énergie comprise entre quelques dizaines de keV et quelques centaines de keV, par exemple entre 10 keV et 200 keV. Cette source 1 émet un rayonnement qui est collimaté à l'aide d'un collimateur de source 2, ce dernier pouvant être réalisé en tungstène ou alliage de tungstène. En l'exemple non limitatif illustré, ce collimateur de source 2 possède une unique fente rectangulaire et a une épaisseur de 100 mm et une hauteur de fente inférieure à 0,5mm ; par example égale à 0,1mm. Il est disposé à une distance de la source 1 égale à 140mm. La source polychromatique 1 et le collimateur de source 2 génèrent un faisceau incident d'axe X. Le diffractomètre selon l'invention présente ensuite un logement d'accueil d'un échantillon de matériau 100, ce logement étant formé de façon à ce que l'échantillon de matériau soit irradié par le faisceau incident généré par la source 1 et le collimateur de source 2. Le diffractomètre selon l'invention comprend de plus un collimateur de détecteur 4 et un détecteur 3, alignés selon un axe de détection D formant avec l'axe X du faisceau incident un angle θ égal ici à 4° (l'échelle n'étant pas respectée dans les figures annexées).

Ce détecteur 3 comprend d'une part un matériau détecteur 30, qui présente, en regard du collimateur de détecteur 4, un plan de détection 31, et d'autre part des moyens électroniques et informatiques de traitement 32 et 33. De préférence, le matériau détecteur 30 utilisé ici est un matériau semi-conducteur tel qu'un matériau à base de CdTe, CdZnTe (CZT), silicium (Si) ou $HgI_2$, susceptible d'être polarisé par une cathode et une anode, disposées sur deux faces opposées du matériau semi-conducteur. On peut également mettre en oeuvre un détecteur au Germanium, en dépit des contraintes précédemment décrites. Lorsqu'un photon pénètre dans le matériau semi-conducteur 30 et interagit avec celui-ci, tout ou partie de son énergie est transférée à des porteurs de charges (couples électron/trou) dans le matériau semi-conducteur. Le détecteur étant polarisé, les porteurs de charges migrent vers les électrodes (dont l'anode). Ils produisent alors un signal électrique aux bornes des électrodes. Ce signal électrique, dont l'amplitude est proportionnelle à l'énergie déposée par le photon lors de l'interaction, est collecté puis traité par des moyens informatiques 32 et 33. Le signal est de préférence collecté uniquement à l'anode ; il peut en variante être collecté uniquement à la cathode, ou aux deux électrodes. Un détecteur à matériau semi-conducteur comprend usuellement une pluralité de pixels physiques, chaque pixel physique correspondant à un circuit de collecte de charges par une électrode. Dans les diffractomètres connus, les détecteurs utilisés présentent un plan de détection recevant le faisceau diffracté qui correspond à un unique pixel, dit pixel complet Pc.

Selon une première caractéristique importante de l'invention, le détecteur 3 est un détecteur pixellisé, ce qui implique que le plan de détection 31 du matériau semi-conducteur 30 comporte plusieurs pixels Pi.

En l'exemple illustré, le plan de détection 31 comporte une colonne de pixels Pi qui se succèdent selon la direction transversale T (orthogonale à l'axe de détection D). Quatre pixels P1 à P4 sont ici représentés (par souci de clarté, un petit nombre de pixels est représenté, mais il peut bien sûr y en avoir plus). Chacun de ces quatre pixels observe un volume de matériau de longueur (selon l'axe X) égale à 17,5mm et détecte le rayonnement diffracté selon un angle moyen θi que l'on peut observer plus aisément à la figure 2, c'est-à-dire le rayonnement diffracté entre les angles θi-δθ/2, et θi+δθ/2 avec δθ de l'ordre de 0,2°. Un pixel complet Pc correspondant aux quatre pixels P1 à P4 du détecteur du diffractomètre selon l'invention détecterait le rayonnement diffracté autour de 4° sur une plage d'angles de diffraction trois fois plus large que celle affectée à chaque pixel Pi.

Il en résulte que la résolution angulaire du détecteur du diffractomètre à détecteur pixellisé selon l'invention est bien meilleure que celle d'un diffractomètre connu dont le détecteur serait doté du pixel complet Pc. Ceci se traduit directement par un gain en résolution énergétique du détecteur.

La pixellisation du plan de détection 31 peut être obtenue de façon physique en utilisant des pixels plus petits. La diminution de la taille des pixels pose cependant divers problèmes. En particulier, les coûts de fabrication sont considérablement augmentés ; la multiplication des voix électroniques de traitement grève aussi les coûts de fabrication et conduit à l'obtention d'un dispositif encombrant. La pixellisation du plan de détection 31 est de préférence obtenue de façon virtuelle, en utilisant une information de localisation, au sein de chaque pixel physique, d'une interaction de photon ayant lieu en regard de ce pixel. Comme l'enseigne la publication "*An approach to sub-pixel spatial resolution in room temperature X-ray detector arrays with good energy resolution*" (W.K. Warburton), il est possible de déterminer les coordonnées (x, y) du barycentre du nuage de charges produit par une interaction, à partir de signaux électriques simultanément générés par cette interaction sur une pluralité d'anodes adjacentes. On considère alors que l'interaction a été détectée uniquement par le pixel virtuel correspondant aux coordonnées du barycentre. Sans une telle méthode, seules les coordonnées du pixel physique ayant collecté le signal maximal sont utilisées. Cette approche, connue en tant que telle, permet de diviser chaque pixel physique en une pluralité de pixels virtuels dans le plan de détection.

Le diffractomètre selon l'invention illustré aux figures 1 et 2 permet d'observer, dans l'échantillon de matériau 100, un volume d'inspection de longueur L qui dépend de l'ouverture du collimateur de détecteur 4. Si le collimateur de détecteur 4 est un collimateur étroit, présentant par exemple une hauteur de fente de 0,4mm, ce qui correspond à une plage de diffraction Δθ de 0,3°, le volume d'inspection est de 63,5mm³ et la longueur d'inspection (selon l'axe X) de 43mm. Si le collimateur de détecteur 4 est un collimateur ouvert, présentant par exemple une hauteur de fente de 2,5mm, ce qui correspond à une plage de diffraction Δθ de 1,6°, le volume d'inspection est de 210mm³ et la longueur d'inspection de 139mm. L'utilisation d'un tel détecteur ouvert peut ici être envisagée grâce au gain en résolution obtenu par l'utilisation d'un détecteur pixellisé.

La figure 3 représente une simulation de deux spectres de diffraction. Un premier spectre 302 est obtenu pour un échantillon d'aluminium par le diffractomètre des figures 1 et 2, en utilisant un collimateur étroit (h=0,4mm). Un deuxième spectre 301 est obtenu sur le même échantillon, en utilisant un collimateur ouvert (h=2,5mm). Afin de ne pas dégrader la résolution énergétique, ces spectres sont recalés.

Ce recalage consiste de préférence en un changement de variable permettant de passer, pour chaque pixel Pi de rang i constituant le détecteur, d'un spectre en énergie à un spectre en transfert de quantité de mouvement par exemple (l'utilisation d'une autre variable est toutefois possible). On rappelle qu'un spectre en énergie est un diagramme représentant le nombre d'interactions de photon constatées en fonction de l'énergie E, exprimée en keV, libérée par l'interaction ; tandis qu'un spectre en transfert de quantité de mouvement est un diagramme représentant le nombre d'interactions constatées en fonction du transfert de quantité de mouvement x, exprimée en nm$^{-1}$, de l'interaction. La nouvelle variable x est obtenue en fonction de l'énergie E et de l'angle de diffraction $\theta_i$ correspondant au pixel Pi de rang i. Par exemple, ce changement de variable est régi par l'équation suivante :

$$x = \frac{\sin(\theta_i / 2)}{\lambda} = \frac{E \sin(\theta_i / 2)}{hc}$$

Du fait du changement de variable, chaque spectre Si(E) correspondant au pixel Pi de rang i est transformé en un spectre Si(x).

Comme on peut le constater à l'examen de cette figure, les pics de diffraction obtenus avec le collimateur de détection ouvert sont bien plus grands et plus lisibles que ceux obtenus avec le collimateur de détection étroit. Cette figure illustre le gain en sensibilité obtenu en passant d'un collimateur étroit à un collimateur ouvert, et ce sans perte en résolution énergétique. L'utilisation d'un détecteur pixellisé permet donc d'envisager l'ouverture de la collimation afin d'améliorer la sensibilité du dispositif, car elle compense la perte en résolution énergétique des pics de diffraction qui s'en suit.

Cependant, l'ouverture du collimateur de détection s'accompagne d'un élargissement du volume inspecté, le risque est alors grand que le volume d'inspection comporte plusieurs couches de matériaux, comme l'illustre la figure 6. Cette figure 6 représente un échantillon de matériau 100 comprenant une couche 101 de graphite et une couche 102 de sel. Le volume d'inspection 201 est celui observé par le collimateur étroit (h=0,4mm) ; il ne comprend que du sel. Le volume d'inspection 200 correspond à celui observé par le collimateur ouvert (h=2,5mm), il comprend du graphite et du sel.

Une deuxième caractéristique importante de l'invention est la combinaison des spectres par groupe qui permet de contourner le problème de la confusion des matériaux dans les spectres obtenus.

Préalablement à cette combinaison, il est avantageux d'effectuer un recalage des spectres énergétiques mesurés.

La figure 4a représente des spectres en énergie mesurés pour un échantillon monomatériau entièrement constitué d'aluminium. La figure 4b représente les spectres recalés correspondants. Il s'agit ici de représentations qualifiées de bi-paramétriques. L'axe des abscisses de la figure 4a représente, de façon usuelle en spectrométrie, l'énergie E libérée par les interactions de photon détectés. L'axe des abscisses de la figure 4b représente le transfert de quantité de mouvement x. Mais, de façon originale, l'intensité énergétique (c'est-à-dire le nombre d'interactions détectées pour chaque énergie ou pour chaque transfert de quantité de mouvement) n'est pas représentée sur l'axe des ordonnées mais à l'aide de nuances de gris. Les zones claires du graphique traduisent une faible intensité, à l'inverse des foncées qui correspondent aux pics de diffraction. L'axe des ordonnées peut alors être utilisé pour un autre paramètre, à savoir la position latérale Yi du pixel Pi dans le détecteur (position selon la direction transversale T). Il est ainsi représenté, sur une même figure l'ensemble des spectres énergétiques mesurés (figure 4a) ou recalés (figure 4b) obtenus pour tous les pixels du détecteur: à chaque ordonnée correspond le spectre d'un pixel. Balayer visuellement l'axe des ordonnées revient à se déplacer dans le détecteur selon la direction T. Pour mieux comprendre la représentation adoptée, il suffit de l'imaginer en trois dimensions. Une « coupe » du graphique à une position latérale Y donnée correspond à un spectre en énergie « 2D classique » tel ceux de la figure 3.

La figure 4 illustre les spectres mesurés et recalés obtenus pour un échantillon monomatériau constitué intégralement d'aluminium. La figure 7 illustre les spectres mesurés et recalés obtenus pour un échantillon multimatériau comprenant une couche de graphite et une couche de sel ; il s'agit de l'échantillon 100 illustré à la figure 6.

La combinaison des spectres recalés s'effectuant, selon l'invention, par groupe, il convient alors de former des groupes de pixels en fonction des couches de matériaux présentes dans l'échantillon.

Pour cela, il y a lieu, tout d'abord, de déterminer si l'échantillon comporte plusieurs couches de matériaux différents. À cette fin, on vérifie la réalisation d'un ou de plusieurs critères multimatériau représentatifs de la présence de plusieurs couches de matériaux. L'un de ses critères peut être la variation dans les spectres recalés de la position du premier maximum local.

Dans les spectres bi-paramétriques des figures 4 et 7, le premier maximum local peut être repéré par les nuances de gris utilisées : le gris le plus foncé correspond au pic de diffraction de plus grande intensité. Le premier maximum local pour un pixel donné correspond donc à la première zone de gris foncé entourée de gris plus clair que l'on rencontre en balayant le spectre selon l'axe des abscisses à ordonnée constante.

Dans les spectres de la figure 4 qui correspondent à un échantillon monomatériau, on constate que la position du premier maximum local ne varie pas ou varie peu en fonction de la position latérale : les zones de gris le plus intense sont alignées verticalement ; elles correspondent à un même transfert de quantité de mouvement pour tous les pixels.

Dans les spectres de la figure 7 qui correspondent à un échantillon multimatériau graphite/sel, on constate que la position du premier maximum local varie selon les pixels. On observe que, pour les pixels dont la position latérale est comprise entre 0 et environ 1mm (partie supérieure de la figure), le premier maximum local est obtenu pour un transfert de quantité de mouvement x de l'ordre de $2nm^{-1}$, alors que pour les pixels dont la position latérale est supérieure à 1 mm (partie basse de la figure), le premier maximum local est obtenu pour un transfert de quantité de mouvement x de l'ordre de $2,3nm^{-1}$.

Pour déterminer avec plus de certitude et de précision si un changement de position du premier maximum local a lieu et, le cas échéant, à quelle position latérale $Y_i$ (c'est-à-dire à quel pixel $P_i$) il a lieu, on construit une courbe représentant la position du premier maximum local en fonction de la position latérale.

Cette courbe 501 est reportée à la figure 5 pour l'échantillon monomatériau en aluminium ; elle confirme que la position du premier maximum local varie peu en fonction des pixels : la courbe 501 obtenue est relativement plate.

La courbe est visible à la figure 8 pour l'échantillon multimatériau graphite/sel. La courbe 801 obtenue présente une pente importante pour une position latérale proche de 1mm (de l'ordre de 0,9): la position du premier maximum local varie (baisse) alors de plus de 10% en moins de 0,2mm.

Pour confirmer ou éventuellement affiner ces résultats, il est avantageux de vérifier la réalisation d'un deuxième critère multimatériau, par exemple d'étudier aussi la variation de la position du second maximum local. Les courbes correspondantes sont obtenues et représentées respectivement à la figures 5 (courbe (502) et à la figure 8 (courbe 802) de façon similaire à celles relatives au premier maximum local. Dans le cas de l'échantillon monomatériau (figure 5), on retrouve une courbe s'approchant d'une droite de pente nulle. Dans le cas de l'échantillon multimatériau graphite/sel (figure 8), on observe à nouveau un saut significatif pour une position latérale $Y_i$ égale à 1 mm.

Les positions latérales autour desquelles une variation significative (saut des courbes 801, 802) de la position du premier et/ou du second maximum local est observée, sont enregistrées comme constituant les bornes des groupes de pixels. Ainsi, dans l'exemple de l'échantillon multimatériau graphite/sel de la figure 6, tous les pixels dont la position latérale est comprise entre 0 et 1mm sont considérés comme appartenant à premier groupe représentatif d'un premier matériau (en l'occurrence, le graphite) ; les pixels dont la position latérale est supérieure à 1mm sont considérés comme appartenant à un deuxième groupe représentatif d'un deuxième matériau (en l'occurrence, le sel). Dans l'exemple de l'échantillon monomatériau en aluminium, les critères multimatériau n'étant pas vérifiés (ce qui signifie qu'un seul matériau a été décelé), un seul groupe contenant tous les pixels du détecteur est formé.

Les spectres recalés sont ensuite sommés par groupe. La figure 9 illustre trois combinaisons de spectres en transfert de quantité de mouvement obtenues pour l'échantillon multimatériau graphite/sel de la figure 6 : le spectre 901 correspond à la somme des spectres recalés de tous les pixels du détecteur ; le spectre 902 correspond à la somme des spectres recalés des pixels du premier groupe défini ci-avant (groupe correspondant au graphite) ; le spectre 903 correspond à la somme des spectres recalés des pixels du deuxième groupe défini ci avant (groupe correspondant au sel).

Comme on peut l'observer sur cette figure 9, la combinaison (somme) par groupe, associée à la pixellisation du détecteur (qui augmente la quantité de signaux générés), permet, par rapport au spectre 901 obtenu pour le détecteur entier :

- de séparer les pics en groupes, ce qui permet de faciliter l'interprétation des spectres : on évite ainsi de considérer que deux pics qui sont en réalité dus à deux matériaux distincts, correspondent à un seul matériau, et donc de se tromper dans l'identification du ou des matériaux en présence.
- d'obtenir des pics de diffraction plus intenses et plus étroits, avec des vallées plus profondes, ce qui facilite l'identification des raies caractéristiques. En d'autres termes, la résolution en énergie est nettement améliorée.

On remarquera également que, s'agissant ici de simulations, aucun bruit de fond n'apparaît sur les spectres illustrés. L'homme du métier comprendra aisément que dans le cas de spectres réellement mesurés, avec un bruit de fond, l'invention permet même de gagner simultanément en sensibilité (du fait d'une limite de détection diminuée) et en résolution énergétique, et qu'elle permet de plus de déceler la présence de plusieurs matériaux et d'en définir avec fiabilité la nature.

L'invention peut faire l'objet de nombreuses variantes par rapport au mode de réalisation illustré, dès lors que ces variantes entrent dans le cadre délimité par les revendications. En particulier, le détecteur peut être constitué de pixels répartis selon plusieurs directions, par exemple selon deux directions dans le plan de détection, plus éventuellement la direction de l'épaisseur. La diffraction selon un angle $\theta$ donné ayant lieu dans toutes les directions autour de l'axe X du faisceau incident suivant un cône (d'angle $\theta$), la pixellisation du plan de détection selon deux directions orthogonales permet d'affiner la résolution angulaire sur l'ensemble de la portion de ce cône captée par le détecteur et d'augmenter plus encore la quantité de signal disponible et traité. D'une façon générale, le rang i du pixel Pi varie donc entre 1 et Imax, Imax étant le nombre de pixels, virtuels ou physiques, que comporte le plan de détection.

Dans l'exemple décrit ci-avant, le critère multimatériau est établi en déterminant la position des premiers ou seconds pics sur les spectres recalés. D'autres types de critères peuvent être mis en oeuvre. Par exemple, on peut déterminer l'intégrale $I_i$, c'est-à-dire la somme des canaux, de chaque spectre $S_i$ obtenu et conclure à la présence de plusieurs matériaux lorsque cette intégrale varie significativement, par exemple de plus de 10%, entre deux pixels adjacents.

En outre, la géométrie du diffractomètre n'est pas limitée aux valeurs numériques fournies ci-avant. Par ailleurs, d'autres méthodes de combinaison de spectres, portant sur des spectres recalés en fonction d'une variable (qui dépend de l'énergie E ou de la longueur d'onde $\lambda$, ainsi que de l'angle de diffraction) autre que le transfert de quantité de mouvement, peuvent être utilisées.

## Revendications

1. Procédé d'analyse d'un échantillon de matériaux (100) par diffractométrie, dans lequel :

   ✓ on utilise un diffractomètre comprenant

   ♦ une source (1) apte à émettre un faisceau incident d'axe central X,
   ♦ un détecteur (3) comprenant

   ∘ un matériau détecteur (30), qui présente, du côté de l'échantillon de matériau, un plan (31) dit plan de détection,
   ∘ des moyens (32), dits moyens de mesure spectrométrique, apte à mesurer une énergie libérée par chaque interaction de photon avec le matériau détecteur et à établir au moins un spectre en énergie, dit spectre mesuré et noté S(E) ;

   ♦ un collimateur (4), dit collimateur de détection, associé au détecteur (3), le détecteur et le collimateur de détection étant agencés de façon à présenter un axe de détection D formant avec l'axe central X du faisceau incident un angle de diffraction θ,

   ✓ on irradie l'échantillon (100) avec le faisceau incident,

   le procédé étant **caractérisé en ce que** :

   ✓ le détecteur (3) utilisé est un détecteur pixellisé, comprenant des moyens de localisation d'une interaction d'un photon avec le matériau détecteur (30), permettant d'une part de définir une partition du détecteur en pixels physiques ou virtuels (Pi), et d'autre part d'associer l'un desdits pixels à chaque interaction de photon ;
✓ on établit un spectre en énergie Si(E) pour chaque pixel (Pi) du détecteur,
✓ on effectue un recalage de chaque spectre en énergie Si(E) mesuré, en exprimant ledit spectre en fonction d'une variable prenant en compte l'énergie du rayonnement diffusé et l'angle de diffraction $\theta_i$, on obtient alors un spectre dit spectre recalé, pour chaque spectre mesuré ;
✓ on vérifie la réalisation d'un au moins un critère, dit critère multimatériau, représentatif de la présence de plusieurs couches de matériaux et choisi parmi

   ♦ une variation supérieure à 10 % de la position dans les spectres recalés d'un premier maximum local, entre deux pixels adjacents selon une direction transversale (T), orthogonale à la direction (D) de détection
   ♦ une variation supérieure à 10 %, de la position dans les spectres recalés d'un second maximum local, entre deux pixels adjacents selon la direction transversale.
   ♦ une variation supérieure à 10% de la somme des canaux du spectre recalé de chaque pixel, entre deux pixels adjacents selon la direction transversale,

   ✓ on forme des groupes de pixels en utilisant des résultats de l'étape de vérification précédente, chaque groupe correspondant à une couche de matériau, des groupes différents correspondant à des couches de matériau différentes,
   ✓ on effectue une étape de combinaison de spectres par groupe, dans laquelle, pour chaque groupe, on combine les spectres recalés obtenus pour les pixels (Pi) dudit groupe.

2. Procédé selon la revendication 1, **caractérisé en ce que**

   ✓ dans l'étape de recalage, les spectres recalés établis sont des spectres Si(x) en transfert de quantité de mouvement, le changement de variable étant effectué en utilisant la formule suivante :

$$x = \frac{\sin(\theta_i / 2)}{\lambda} = \frac{E \sin(\theta_i / 2)}{hc}, \text{ où}$$

   θi désigne l'angle de diffraction correspondant au pixel i c'est-à-dire l'angle entre l'axe X du faisceau incident et l'axe Di passant par le centre du pixel Pi et le centre du collimateur de détection, et λ est la longueur d'onde correspondant à l'énergie E ;

✔ dans l'étape de combinaison de spectres par groupe, pour chaque groupe, on somme les spectres recalés Si(x) des pixels du groupe.

3. Procédé selon la revendication 1 ou 2, **caractérisé en ce qu'**on construit une courbe représentant, en ordonnées, la position dans le spectre du premier ou du second maximum local, en fonction, en abscisses, de la position latérale (Yi) du pixel (Pi) ou de son l'angle de diffraction θi.

4. Procédé selon l'une des revendications précédentes, **caractérisé en ce que** le détecteur (3) utilisé est pixellisé dans le plan détection.

5. Procédé selon l'une des revendications précédentes, **caractérisé en ce que** le détecteur (3) utilisé est du type détecteur à matériau (30) semi-conducteur.

6. Procédé selon l'une des revendications précédentes, **caractérisé en ce que** la source (1) utilisée est une source polychromatique, produisant un rayonnement dont l'énergie maximale est comprise entre 10 et 200 keV.

7. Procédé selon l'une des revendications précédentes, **caractérisé en ce que** l'angle θ de diffraction est compris entre 2° et 10°.

8. Procédé selon l'une des revendications précédentes, **caractérisé en ce que** le collimateur de détection est un collimateur à fente (4) ouvert, dont la fente présente une hauteur supérieure à 1 mm.

9. Diffractomètre, pour l'analyse d'un échantillon de matériau (100) par diffractométrie, comprenant :

   ♦ une source (1) apte à émettre un faisceau incident d'axe central X,
   ♦ un détecteur (3) comprenant

   ◦ un matériau détecteur (30), qui présente, du côté de l'échantillon de matériau, un plan (31) dit plan de détection,
   ◦ des moyens (32), dits moyens de mesure spectrométrique, apte à mesurer une énergie libérée par chaque interaction de photon avec le matériau détecteur et à établir au moins un spectre en énergie, noté S(E) et dit spectre mesuré ;

   ♦ un collimateur (4), dit collimateur de détection, associé au détecteur (3), le détecteur et le collimateur de détection étant agencés de façon à présenter un axe de détection D formant avec l'axe central X du faisceau incident un angle de diffraction θ,

**caractérisé en ce que** :

✔ le détecteur est pixellisé en ce sens qu'il comprend des moyens de localisation d'une interaction d'un photon avec le matériau détecteur (30), permettant d'une part de définir une partition du détecteur en pixels physiques ou virtuels, et d'autre part d'associer l'un desdits pixels à chaque interaction de photon ;
✔ les moyens de mesure spectrométrique (32) sont aptes à établir un spectre en énergie mesuré Si(E) pour chaque pixel (Pi) du détecteur,
✔ le diffractomètre comprend de plus

   ◦ des moyens de calcul (32), dits moyens de recalage, aptes à établir, pour chaque spectre en énergie mesuré, un spectre recalé exprimé en fonction d'une variable prenant en compte l'énergie du rayonnement diffusé et l'angle de diffraction $θ_i$,
   ◦ des moyens (33) de vérification de la réalisation d'un au moins un critère, dit critère multimatériau, représentatif de la présence de plusieurs couches de matériaux et choisi parmi

   ♦ une variation supérieure à 10 % de la position dans les spectres recalés d'un premier maximum local, entre deux pixels adjacents selon une direction transversale (T), orthogonale à la direction (D) de détection
   ♦ une variation supérieure à 10 %, de la position dans les spectres recalés d'un second maximum local, entre deux pixels adjacents selon la direction transversale.
   ♦ une variation supérieure à 10% de la somme des canaux du spectre recalé de chaque pixel, entre deux pixels adjacents selon la direction transversale.

   ◦ des moyens (33) de formation de groupes de pixels, chaque groupe correspondant à une couche de matériau, des groupes différents correspondant à des couches de matériau différentes,
   ◦ des moyens de combinaison (33) de spectres par groupe, aptes à combiner, pour chaque groupe, les spectres recalés obtenus pour les pixels dudit groupe.

10. Diffractomètre selon la revendication précédente, **caractérisé en ce que** :

✓ les moyens de recalage (32) sont aptes à établir, pour chaque pixel (Pi), un spectre en transfert de quantité de mouvement Si(x), à partir du spectre mesuré Si(E) par changement de variable en utilisant la formule :

$$x = \frac{\sin(\theta_i/2)}{\lambda} = \frac{E\sin(\theta_i/2)}{hc}$$ où θi désigne l'angle de diffraction correspondant au pixel (Pi) et λ est la longueur d'onde correspondant à l'énergie E,

✓ les moyens (33) de combinaison de spectres par groupe sont adaptés pour calculer la somme des spectres recalés Si(x) des pixels d'un même groupe.

11. Diffractomètre selon l'une des revendications de dispositif précédentes, **caractérisé en ce que** :

✓ les moyens (33) de vérification d'au moins un critère multimatériau sont aptes à établir une courbe représentant, en ordonnées, la position d'un premier maximum local dans le spectre recalé d'un pixel Pi, en fonction, en abscisses, d'un angle de diffraction θi du pixel Pi ou d'une position latérale Yi de celui-ci, définie comme étant une coordonnée du pixel Pi selon une direction transversale (T), orthogonale à l'axe de détection D et contenue dans un plan de détection (X,D).

✓ les moyens (33) de formation de groupes de pixels sont adaptés pour regrouper dans un même groupe deux pixels $P_i$ et $P_{i+1}$ adjacents selon la direction transversale si et seulement si la différence entre la position du premier maximum local dans le spectre du pixel $P_i$ et la position du premier maximum local dans le spectre du pixel $P_{i+1}$ ne varient pas de plus de 10%.

12. Diffractomètre selon l'une des revendications de dispositif précédentes, **caractérisé en ce que** le matériau détecteur (30) du détecteur (3) est un matériau semi-conducteur.

13. Diffractomètre selon l'une des revendications de dispositif précédentes, caractérisé en ce l'angle θ de diffraction est compris entre 2° et 10°.

14. Diffractomètre selon l'une des revendications de dispositif précédentes, **caractérisé en ce que** le collimateur de détection (4) est un collimateur à fente ouvert, dont la fente présente une hauteur (h) supérieure à 1mm.

**Patentansprüche**

1. Verfahren zur Analyse einer Materialprobe (100) mittels Diffraktometrie, wobei

- ein Diffraktometer verwendet wird, enthaltend:

• eine Quelle (1), die dazu geeignet ist, ein Strahlenbündel, das mit der Mittelachse X einfällt, zu emittieren,
• einen Sensor (3), enthaltend:

∘ ein Sensormaterial (30), das auf der Seite der Materialprobe eine Ebene (31), Erfassungsebene genannt, aufweist,
∘ Mittel (32), spektrometrische Messmittel genannt, die dazu geeignet sind, eine jeweils bei der Photonwechselwirkung mit dem Sensormaterial freigesetzte Energie zu messen und zumindest ein Energiespektrum, Messspektrum genannt und mit S(E) bezeichnet, zu erstellen,
∘ einen Kollimator (4), Erfassungskollimator genannt, der dem Sensor (3) zugeordnet ist, wobei der Sensor und der Erfassungskollimator so angeordnet sind, dass sie eine Erfassungsachse D aufweisen, die mit der Mittelachse X des einfallenden Strahlenbündels einen Beugungswinkel θ bildet,

- die Probe (100) mit dem einfallenden Strahlenbündel bestrahlt wird, wobei das Verfahren **dadurch gekennzeichnet ist, dass**
- der verwendete Sensor (3) ein Pixelsensor ist, der Mittel zum Lokalisieren einer Wechselwirkung eines Photons mit dem Materialsensor (30) enthält, die einerseits gestatten, eine Teilung des Sensors in physische oder virtuelle Pixel (Pi) zu definieren und andererseits jeder Photonwechselwirkung eines der Pixel zuzuordnen;
- ein Energiespektrum Si(E) für jedes Pixel (Pi) des Sensors erstellt wird,
- eine Neueinstellung eines jeden gemessenen Energiespektrums Si(E) durchgeführt wird, indem das Spektrum in Abhängigkeit von einer Variablen ausgedrückt wird, welche die Energie der gestreuten Strahlung und den Beugungswinkel $\theta_i$ berücksichtigt, wobei dann ein Spektrum, neueingestelltes Spektrum genannt, für jedes Messspektrum erhalten wird;
- die Erfüllung zumindest eines Kriteriums, Mehrfachmaterialkriterium genannt, überprüft wird, das für das Vorhandensein von mehreren Materialschichten repräsentativ und ausgewählt ist aus:

∘ einer Änderung der Position eines ersten, lokalen Maximalwerts in den neueingestellten Spektren um mehr als 10 % zwischen zwei Pixeln, die in einer Querrichtung (T) aneinandergrenzen, die orthogonal zur Erfassungsrichtung (D) verläuft,

∘ einer Änderung der Position eines zweiten, lokalen Maximalwerts in den neueingestellten Spektren um mehr als 10 % zwischen zwei Pixeln, die in Querrichtung aneinandergrenzen,

∘ einer Änderung der Summe der Kanäle des neueingestellten Spektrums eines jeden Pixels um mehr als 10 % zwischen zwei Pixeln, die in Querrichtung aneinandergrenzen,

- Gruppen von Pixeln unter Verwendung der Ergebnisse aus dem vorhergehenden Überprüfungsschritt gebildet werden, wobei jede Gruppe einer Materialschicht entspricht und verschiedene Gruppen verschiedenen Materialschichten entsprechen,

- ein Schritt des Kombinierens von Spektren pro Gruppe durchgeführt wird, wobei für jede Gruppe die neueingestellten Spektren kombiniert werden, die für die Pixel (Pi) der Gruppe erhalten wurden.

2. Verfahren nach Anspruch 1, **dadurch gekennzeichnet, dass**

- bei dem Schritt der Neueinstellung die erstellten, neueingestellten Spektren Impulsübertragungsspektren Si(x) sind, wobei die Änderung der Variablen unter Anwendung der nachfolgenden Formel durchgeführt wird:

$$x = \frac{\sin(\theta_i/2)}{\lambda} = \frac{E\sin(\theta_i/2)}{hc}$$

worin $\theta_i$ den Beugungswinkel bezeichnet, der dem Pixel i entspricht, d. h. den Winkel zwischen der Achse X des einfallenden Strahlenbündels und der Achse Di, die durch die Mitte des Pixels Pi und die Mitte des Erfassungskollimators verläuft, und wobei $\lambda$ die Wellenlänge ist, die der Energie E entspricht;

- bei dem Schritt des Kombinierens von Spektren pro Gruppe für jede Gruppe die neueingestellten Spektren Si(x) der Pixel der Gruppe summiert werden.

3. Verfahren nach Anspruch 1 oder 2, **dadurch gekennzeichnet, dass** eine Kurve konstruiert wird, die die Position des ersten oder des zweiten lokalen Maximalwerts im Spektrum als Ordinate in Abhängigkeit von der seitlichen Position (Yi) des Pixels (Pi)

oder seines Beugungswinkels $\theta_i$ als Abszisse darstellt.

4. Verfahren nach einem der vorangehenden Ansprüche, **dadurch gekennzeichnet, dass** der verwendete Sensor (3) in der Erfassungsebene gepixelt ist.

5. Verfahren nach einem der vorangehenden Ansprüche, **dadurch gekennzeichnet, dass** der verwendete Sensor (3) als Halbleitermaterialsensor (30) ausgeführt ist.

6. Verfahren nach einem der vorangehenden Ansprüche, **dadurch gekennzeichnet, dass** die verwendete Quelle (1) eine polychromatische Quelle ist, die eine Strahlung erzeugt, deren maximale Energie zwischen 10 und 200 keV beträgt.

7. Verfahren nach einem der vorangehenden Ansprüche, **dadurch gekennzeichnet, dass** der Beugungswinkel $\theta$ zwischen 2° und 10° beträgt.

8. Verfahren nach einem der vorangehenden Ansprüche, **dadurch gekennzeichnet, dass** der Erfassungskollimator ein offener Schlitzkollimator (4) ist, dessen Schlitz eine Höhe von über 1 mm aufweist.

9. Diffraktometer für die Analyse einer Materialprobe (100) durch Diffraktometrie, enthaltend:

• eine Quelle (1), die dazu geeignet ist, ein Strahlenbündel, das mit der Mittelachse X einfällt, zu emittieren,
• einen Sensor (3), enthaltend:

∘ ein Sensormaterial (30), das auf der Seite der Materialprobe eine Ebene (31), Erfassungsebene genannt, aufweist,
∘ Mittel (32), spektrometrische Messmittel genannt, die dazu geeignet sind, eine jeweils bei der Photonwechselwirkung mit dem Sensormaterial freigesetzte Energie zu messen und zumindest ein Energiespektrum, Messspektrum genannt und mit S(E) bezeichnet, zu erstellen,
∘ einen Kollimator (4), Erfassungskollimator genannt, der dem Sensor (3) zugeordnet ist, wobei der Sensor und der Erfassungskollimator so angeordnet sind, dass sie eine Erfassungsachse D aufweisen, die mit der Mittelachse X des einfallenden Strahlenbündels einen Beugungswinkel $\theta$ bildet,

**dadurch gekennzeichnet, dass**

- der Sensor dahingehend gepixelt ist, dass er Mittel zum Lokalisieren einer Wechselwirkung eines Photons mit dem Sensormaterial (30) enthält, die einerseits gestatten, eine Teilung des Sensors in physische oder virtuelle Pixel zu definieren und andererseits jeder Photonwechselwirkung eines der Pixel zuzuordnen;

- die Mittel zur spektrometrischen Messung (32) dazu geeignet sind, ein gemessenes Energiespektrum Si(E) für jedes Pixel (Pi) des Sensors zu erstellen,

- das Diffraktometer ferner enthält:

  ◦ Rechenmittel (32), Neueinstellmittel genannt, die dazu geeignet sind, für jedes gemessene Energiespektrum ein neueingestelltes Spektrum zu erstellen, das ausgedrückt wird in Abhängigkeit von einer Variablen, welche die Energie der gestreuten Strahlung und den Beugungswinkel $\theta_i$ berücksichtigt,
  ◦ Mittel (33) zum Überprüfen der Erfüllung zumindest eines Kriteriums, Mehrfachmaterialkriterium genannt, das für das Vorhandensein von mehreren Materialschichten repräsentativ und ausgewählt ist aus:

    • einer Änderung der Position eines ersten, lokalen Maximalwerts in den neueingestellten Spektren um mehr als 10 % zwischen zwei Pixeln, die in einer Querrichtung (T) aneinandergrenzen, die orthogonal zur Erfassungsrichtung (D) verläuft,
    • einer Änderung der Position eines zweiten, lokalen Maximalwerts in den neueingestellten Spektren um mehr als 10 % zwischen zwei Pixeln, die in Querrichtung aneinandergrenzen,
    • einer Änderung der Summe der Kanäle des neueingestellten Spektrums eines jeden Pixels um mehr als 10 % zwischen zwei Pixeln, die in Querrichtung aneinandergrenzen,

  ◦ Mittel (33) zum Bilden von Pixelgruppen, wobei jede Gruppe einer Materialschicht entspricht und verschiedene Gruppen verschiedenen Materialschichten entsprechen,
  ◦ Mittel (33) zum Kombinieren von Spektren pro Gruppe, die dazu geeignet sind, für jede Gruppe die neueingestellten Spektren zu kombinieren, die für die Pixel der Gruppe erhalten wurden.

10. Diffraktometer nach dem vorangehenden Anspruch, **dadurch gekennzeichnet, dass**

    - die Neueinstellmittel (32) dazu geeignet sind, für jedes Pixel (Pi) ein Impulsübertragungsspektrum Si(x) zu erstellen, und zwar ausgehend von dem Messspektrum Si(E) durch Änderung der Variablen unter Anwendung der nachfolgenden Formel:

$$x = \frac{\sin(\theta_i/2)}{\lambda} = \frac{E\sin(\theta_i/2)}{hc}$$

worin $\theta_i$ den Beugungswinkel bezeichnet, der dem Pixel (Pi) entspricht, und wobei $\lambda$ die Wellenlänge ist, die der Energie E entspricht;

- Mittel (33) zum Kombinieren von Spektren pro Gruppe, die dazu ausgelegt sind, die Summe der neueingestellten Spektren Si(x) der Pixel der einer gleichen Gruppe zu berechnen.

11. Diffraktometer nach einem der vorangehenden Vorrichtungsansprüche, **dadurch gekennzeichnet, dass**

    - die Mittel (33) zum Überprüfen von zumindest einem Mehrfachmaterialkriterium dazu geeignet sind, eine Kurve zu erstellen, die die Position eines ersten lokalen Maximalwerts in dem neueingestellten Spektrum eines Pixels Pi als Ordinate in Abhängigkeit von einen Beugungswinkel $\theta_i$ des Pixels Pi oder einer seitlichen Position (Yi) desselben als Abszisse darstellt, die definiert ist als eine Koordinate des Pixels Pi in einer Querrichtung (T), die orthogonal zur Erfassungsachse D verläuft und in einer Erfassungsebene (X, D) enthalten ist,
    - Mittel (33) zum Bilden von Pixelgruppen, die dazu ausgelegt sind, in einer gleichen Gruppe zwei Pixel $P_i$ und $P_{i+1}$ umzugruppieren, die in der Querrichtung aneinandergrenzen, und zwar dann, und nur dann, wenn die Differenz zwischen der Position des ersten lokalen Maximalwertes in dem Spektrum des Pixels $P_i$ und der Position des ersten lokalen Maximalwertes in dem Spektrum des Pixels $P_{i+1}$ nicht um mehr als 10 % variiert.

12. Diffraktometer nach einem der vorangehenden Vorrichtungsansprüche, **dadurch gekennzeichnet, dass** das Sensormaterial (30) des Sensors (3) ein Halbleitermaterial ist.

13. Diffraktometer nach einem der vorangehenden Vorrichtungsansprüche, **dadurch gekennzeichnet, dass** der Beugungswinkel $\theta$ zwischen 2° und 10° beträgt.

14. Diffraktometer nach einem der vorangehenden Vorrichtungsansprüche, **dadurch gekennzeichnet, dass** der Erfassungskollimator (4) ein offener Schlitzkollimator (4) ist, dessen Schlitz eine Höhe (h) von über 1 mm aufweist.

**Claims**

1. A method of analyzing a sample of materials (100) by diffractometry, in which:

   ✓ a diffractometer is used which comprises

      ♦ a source (1) configured to emit an incident beam with a central axis X,
      ♦ a detector (3) comprising

         ○ a detector material (30), which, on the near side to the sample of material, presents a plane (31) here termed detection plane,
         ○ means (32), here termed spectrometry measurement means, configured to measure an energy released by each photon interaction with the detector material and to establish at least one energy spectrum, here termed measured spectrum and denoted S(E);

      ♦ a collimator (4), here termed detection collimator, associated with the detector (3), the detector and the detection collimator being arranged so as to have a detection axis D forming a diffraction angle θ with the central axis X of the incident beam,

   ✓ the sample (100) is irradiated with the incident beam,

   the method being **characterized in that**:

   ✓ the detector (3) used is a pixelated detector, comprising means for locating an interaction of a photon with the detector material (30), making it possible to define a partition of the detector in physical or virtual pixels (Pi), and making it possible to associate one of said pixels with each photon interaction;
   ✓ an energy spectrum Si(E) is established for each pixel (Pi) of the detector,
   ✓ adjustment of each measured energy spectrum Si(E) is made, by expressing said spectrum according to a variable taking into account the energy of the scattered radiation and the diffraction angle $\theta_i$, a spectrum here termed adjusted spectrum is thus obtained, for each measured spectrum;
   ✓ verification is made of the fulfillment of at least one criterion, here termed multimaterial criterion, representing the presence of several layers of materials and chosen from among

   ♦ a variation greater than 10%, of the position in the adjusted spectra of a first local maximum, between two adjacent pixels in the transverse direction (T), orthogonal to the detection direction (D)
   ♦ a variation greater than 10%, of the position in the adjusted spectra of a second local maximum, between two adjacent pixels in the transverse direction,
   ♦ a variation greater than 10%, of the sum of the channels of the adjusted spectrum of each pixel, between two adjacent pixels in the transverse direction,

   ✓ groups of pixels are formed using results of the preceding verifying step, each group corresponding to a layer of material, different groups corresponding to different layers of material,
   ✓ a step of combining spectra by group is carried out, in which, for each group, the adjusted spectra obtained for the pixels (Pi) of said group are combined.

2. A method according to claim 1, **characterized in that**

   ✓ in the adjusting step, the adjusted spectra established are spectra Si(x) in terms of momentum transfer, the change in variable being carried out using the following formula:

   $$x = \frac{\sin(\theta_i / 2)}{\lambda} = \frac{E \sin(\theta_i / 2)}{hc},$$

   where $\theta_i$ designates the diffraction angle corresponding to the pixel i that is to say the angle between the axis X of the incident beam and the axis Di passing by the center of the pixel Pi and the center of the detection collimator, and $\lambda$ is the wavelength corresponding to the energy E;

   ✓ in the step of combining spectra by group, for each group, the adjusted spectra Si(x) of the pixels of the group are summed.

3. A method according to claim 1 or 2, **characterized in that** a curve is constructed representing, along the y-axis, the position in the spectrum of the first or second local maximum, based, along the x-axis, on the lateral position (Yi) of the pixel (Pi) or on its diffraction angle θi.

4. A method according to one of the preceding claims, **characterized in that** the detector (3) used is pixelated in the detection plane.

5. A method according to one of the preceding claims, **characterized in that** the detector (3) used is the type with a semiconductor detector material (30).

6. A method according to one of the preceding claims, **characterized in that** the source (1) used is a polychromatic source, producing radiation having a maximum energy comprised between 10 and 200 keV.

7. A method according to one of the preceding claims, **characterized in that** the diffraction angle θ is comprised between 2° and 10°.

8. A method according to one of the preceding claims, **characterized in that** the detection collimator is an open slot collimator (4), the slot of which has a height greater than 1 mm.

9. A diffractometer, for the analysis of a sample of material (100) by diffractometry, comprising:

   ♦ a source (1) configured to emit an incident beam with a central axis X,
   ♦ a detector (3) comprising

     ◦ a detector material (30), which, on the near side to the sample of material, presents a plane here termed detection plane,
     ◦ means (32), here termed spectrometry measurement means, configured to measure an energy released by each photon interaction with the detector material and to establish at least one energy spectrum, denoted S(E) and here termed measured spectrum;

   ♦ a collimator (4), here termed detection collimator, associated with the detector (3), the detector and the detection collimator being arranged so as to have a detection axis D forming a diffraction angle θ with the central axis X of the incident beam,

   **characterized in that**:

   ✓ the detector is pixelated **in that** it comprises means for locating an interaction of a photon with the detector material (30), making it possible to define a partition of the detector in physical or virtual pixels, and making it possible to associate one of said pixels with each photon interaction;
   ✓ the spectrometry measuring means (32) are configured to establish a measured energy spectrum Si(E) for each pixel (Pi) of the detector,
   ✓ the diffractometer further comprises

     ◦ computing means (32), here termed adjusting means, configured to establish, for each measured energy spectrum, an adjusted spectrum expressed according to a variable taking into account the energy of the scattered radiation and the diffraction angle θi,
     ◦ means (33) for verifying the fulfillment of at least one criterion, here termed multimaterial criterion, representing the presence of several layers of materials and chosen from among

       ♦ a variation greater than 10%, of the position in the adjusted spectra of a first local maximum, between two adjacent pixels in the transverse direction (T), orthogonal to the detection direction (D),
       ♦ a variation greater than 10%, of the position in the adjusted spectra of a second local maximum, between two adjacent pixels in the transverse direction,
       ♦ a variation greater than 10%, of the sum of the channels of the adjusted spectrum of each pixel, between two adjacent pixels in the transverse direction.

     ◦ means (33) for forming groups of pixels, each group corresponding to a layer of material, different groups corresponding to different layers of material,
     ◦ means (33) for combining spectra by group, adapted, for each group, to combine the adjusted spectra obtained for the pixels of said group.

10. A diffractometer according to the preceding claim, **characterized in that**:

    ✓ the adjusting means (32) are configured to establish, for each pixel (Pi), a momentum transfer spectrum Si(x), from the measured spectrum Si(E) by change in variable using the formula:

    $$x = \frac{\sin(\theta_i / 2)}{\lambda} = \frac{E \sin(\theta_i / 2)}{hc} \quad \text{where}$$

    θi designates the diffraction angle corresponding to the pixel (Pi) and λ is the wavelength corresponding to the energy E,

    ✓ the means for (33) for combining spectra by group are configured to calculate the sum of the adjusted spectra Si(x) of the pixels of a same group.

11. A diffractometer according to one of the preceding device claims, **characterized in that**

✔ the means (33) for verifying at least one multimaterial criterion are configured to establish a curve representing the position of a first local maximum in the adjusted spectrum of a pixel Pi, along the y-axis, according to the angle of diffraction $\theta_i$ of the pixel Pi or a lateral position Yi thereof, along the x-axis, the lateral position Yi being defined as a coordinate of the pixel Pi in a transverse direction (T), orthogonal to the detection axis D and contained in a detection plane (X,D).

✔ the means (33) for forming groups of pixels are configured to group together within a same group two adjacent pixels $P_i$ and $P_{i+1}$ in the transverse direction if and only if the difference between the position of the first local maximum in the spectrum of the pixel $P_i$ and the position of the first local maximum in the spectrum of the pixel $P_{i+1}$ do not vary by more than 10%.

12. A diffractometer according to one of the preceding device claims, **characterized in that** the detector material (30) of the detector (3) is a semiconductor material.

13. A diffractometer according to one of the preceding device claims, **characterized in that** the diffraction angle $\theta$ is comprised between 2 and 10°.

14. A diffractometer according to one of the preceding device claims, **characterized in that** the detection collimator (4) is an open slot collimator, the slot of which has a height (h) greater than 1 mm.

Fig.1

Fig.2

EP 2 898 315 B1

Fig. 3

Fig. 4a

Fig. 4b

Fig. 4

Fig. 5

Fig. 6

Fig. 7a

Fig. 7b

Fig. 7

Fig. 8

Fig. 9

**EP 2 898 315 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008142446 A

- FR 1162497